# EUROPEAN PATENT APPLICATION

(11) **EP 4 847 199 A2**
(43) Date of publication of application: **02.12.2026**
(21) Application number: 26213186.5
(22) Date of filing: 05.02.2025
(51) Int. Cl.: B24B 27/00

(54) **MECHANICAL SURFACE TREATING COMPONENT WITH SPHERICAL ROLLER**

(30) Priority: 05.02.2024 US 202418432855
(62) Document number(s) of the earlier application(s) in accordance with Art. 76 EPC: 25155960.5 / 4 606 520
(71) Applicant: RTX Corporation, Farmington, CT 06032 (US)
(72) Inventor: WYSOCKI, Joseph B., Somers, 06071 (US); EL-WARDANY, Tahany, Vernon, 06066 (US); BARNAT, Krzysztof, Berlin, 06037 (US); GORMLEY, Stephen, Weatogue, 06089 (US); GREENBANK, Samuel, Vernon, 06066 (US)
(74) Representative: Dehns

(57) **Abstract**

A system (20) for mechanical surface treating a component (22) includes a tool (26) and a manipulator (28). The tool (26) includes a roller support (36), a spherical roller (38) and a biasing device (44). The roller support (36) includes an endwall, a port (72) and an internal cavity (54). The roller support (36) extends longitudinally along a longitudinal axis (46) to the endwall. The port (72) extends from the internal cavity (54) through the endwall. The spherical roller (38) is nested in the port (72) with an exposed portion (100) of the spherical roller (38) projecting out of the roller support (36) from the port (72). The exposed portion (100) of the spherical roller (38) is configured to contact a surface (24) of the component (22). The biasing device (44) is disposed in the internal cavity (54) and biases the spherical roller (38) against the endwall. The manipulator (28) may move the tool (26) along the surface (24) of the component (22). The manipulator (28) may apply a static pressure load against the surface (24) of the component (22) through the spherical roller (38).

## Description

### BACKGROUND OF THE DISCLOSURE

### 1. Technical Field

This disclosure relates generally to mechanical surface treating a component such as, for example, an aerospace component.

### 2. Background Information

A surface of a component may be mechanically treated to impart compressive stresses within material of the component below the surface. Various systems and methods are known in the art for mechanical surface treating of a component. While these known mechanical surface treatment systems and methods have various benefits, there is still room in the art for improvement.

### SUMMARY OF THE DISCLOSURE

According to an aspect of the present disclosure, a system is provided for mechanical surface treating a component. This system includes a tool and a manipulator. The tool includes a roller support, a spherical roller and a biasing device. The roller support includes an endwall, a port and an internal cavity. The roller support extends longitudinally along a longitudinal axis to the endwall. The port extends from the internal cavity through the endwall. The spherical roller is nested in the port with an exposed portion of the spherical roller projecting out of the roller support from the port. The exposed portion of the spherical roller is configured to contact a surface of the component. The biasing device is disposed in the internal cavity and configured to bias the spherical roller against the endwall. The manipulator is operatively coupled to the tool. The manipulator is configured to move the tool along the surface of the component such that the spherical roller rolls along the surface of the component. The manipulator is configured to apply a static pressure load against the surface of the component through the spherical roller.

According to another aspect of the present disclosure, an apparatus is provided for mechanical surface treating a component. This apparatus includes a roller, a spherical roller, a spherical bearing element, a bushing and a spring element. The roller support extends longitudinally along a longitudinal axis to a distal end. The roller support includes an endwall, a port and an internal cavity. The endwall forms the distal end of the roller support. The port extends from the internal cavity through the endwall. The spherical roller is disposed in the port and contacts the endwall. An exposed portion of the spherical roller projects out of the roller support from the port. The exposed portion of the spherical roller is configured to contact a surface of the component during a mechanical surface treatment operation on the component. The spherical bearing element is disposed in the internal cavity and contacts the spherical roller. The bushing is disposed in the internal cavity and contacts the spherical bearing element with the spherical bearing element longitudinally between the spherical roller and the bushing. The spring element is disposed in the internal cavity and biased longitudinally against the bearing. The spring element is configured to bias the spherical roller against the endwall through the spherical bearing element and the bushing.

According to still another aspect of the present disclosure, a method of operation is provided during which a tool is arranged with a component. The tool includes a spherical roller, a spherical bearing element, a bushing and a spring element. The spherical roller contacts a surface of the component. The spring element biases the spherical bearing element against the spherical roller through the bushing. A rolling operation on the surface of the component is performed with the spherical roller.

The following optional features may be applied to any of the above aspects.

The biasing device may be configured as or otherwise include a spring element.

The performing of the rolling operation may include: applying a static pressure load against the surface of the component with the spherical roller; and moving the tool with a manipulator to roll the spherical roller along the surface of the component as the static pressure load is applied against the surface of the component.

The apparatus may also include an air bearing which includes the bushing.

The endwall may include a bearing surface at least partially forming the port. The bearing surface may have a spherical segment geometry. The biasing device may be configured to bias the spherical bearing against the bearing surface.

The bearing surface may extend to a longitudinal distal end of the roller support.

The bearing surface may include a bearing segment and a bore segment. The bearing segment may have the spherical segment geometry. The biasing device may be configured to bias the spherical bearing against the bearing segment. The bore segment may have a frustoconical geometry flaring out from the bearing segment as the bore segment extends longitudinally towards the internal cavity.

The tool may also include a spherical bearing element disposed in the internal cavity and longitudinally contacting the spherical roller. The biasing device may be configured to bias the spherical bearing element against the spherical roller.

The spherical bearing element may project longitudinally into the port.

The spherical roller may have a roller diameter. The spherical bearing element may have a bearing element diameter which is greater than the roller diameter.

The spherical roller may have a roller diameter. The spherical bearing element may have a bearing element diameter which is equal to the roller diameter.

The tool may also include a bushing disposed in the internal cavity. The spherical bearing element may be longitudinally between and contact spherical roller and the bushing. The biasing device may be configured to bias the bushing against the spherical bearing element.

The biasing device may longitudinally contact the bushing.

The bushing may include a bearing surface forming a recess in the bushing. The bearing surface may include a spherical segment geometry. The spherical bearing element may contact and may move along the bearing surface.

The tool may also include a gas bearing, and the gas bearing may include the bushing.

The tool may also include an internal source gas circuit. The bushing may be configured from or otherwise include a porous material fluidly coupling the internal source gas circuit to the internal cavity.

The biasing device may be configured from or otherwise include one or more Belleville springs.

The roller support may include a housing and an adaptor threaded into the housing. The housing may include a tubular sidewall and the endwall. The cavity may extend through the tubular sidewall from the adaptor to the endwall.

The roller support may also include one or more jam nuts locking the adaptor with the housing.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a system for mechanical surface treating a component.
FIG. 2 is a partial sectional illustration of a mechanical surface treatment tool engaging a component surface.
FIG. 3 is another partial sectional illustration of the mechanical surface treatment tool engaging the component surface.
FIG. 4 is a flow diagram of a method for mechanical surface treating a component.
FIG. 5 is a partial sectional illustration of the mechanical surface treatment tool engaging the component surface with a gas bearing.
FIG. 6 is a sectional illustration of a housing for the mechanical surface treatment tool.
FIGS. 7A and 7B are schematic illustrations of a spherical roller and a spherical bearing element with various dimensional relationships.

### DETAILED DESCRIPTION

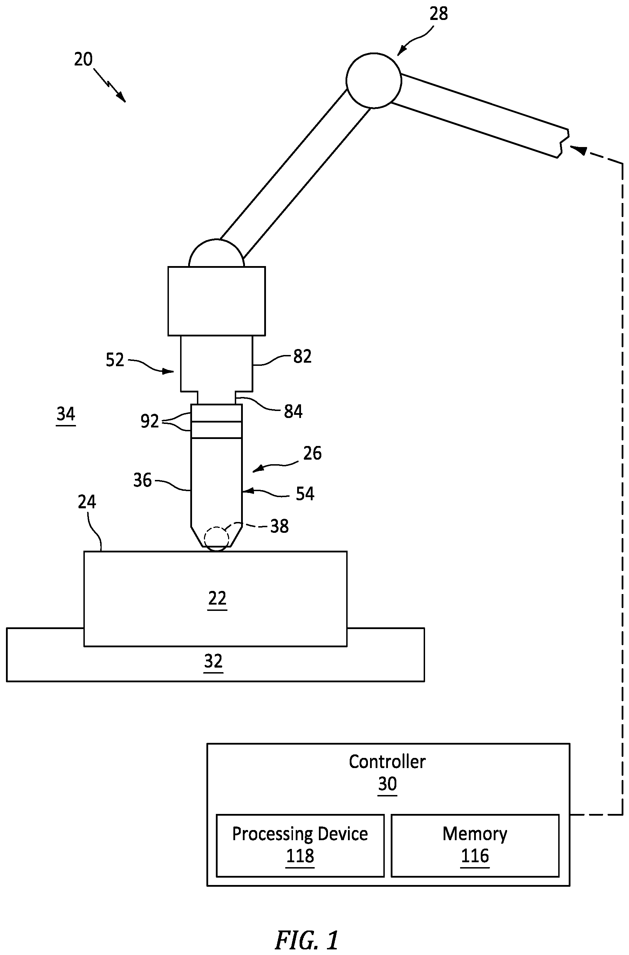

FIG. 1 illustrates a system 20 for mechanical surface treating a component 22; e.g., a metal aerospace component. This treatment system 20 is configured to impart compressive stresses within material of the component 22 below and adjacent an exterior surface 24 of the component 22. The treatment system 20 includes a mechanical surface treatment tool 26 (e.g., a deep rolling tool), a manipulator 28 and a controller 30. The treatment system 20 of FIG. 1 also includes a fixture 32 for holding the component 22 within a workspace 34 during the mechanical surface treatment.

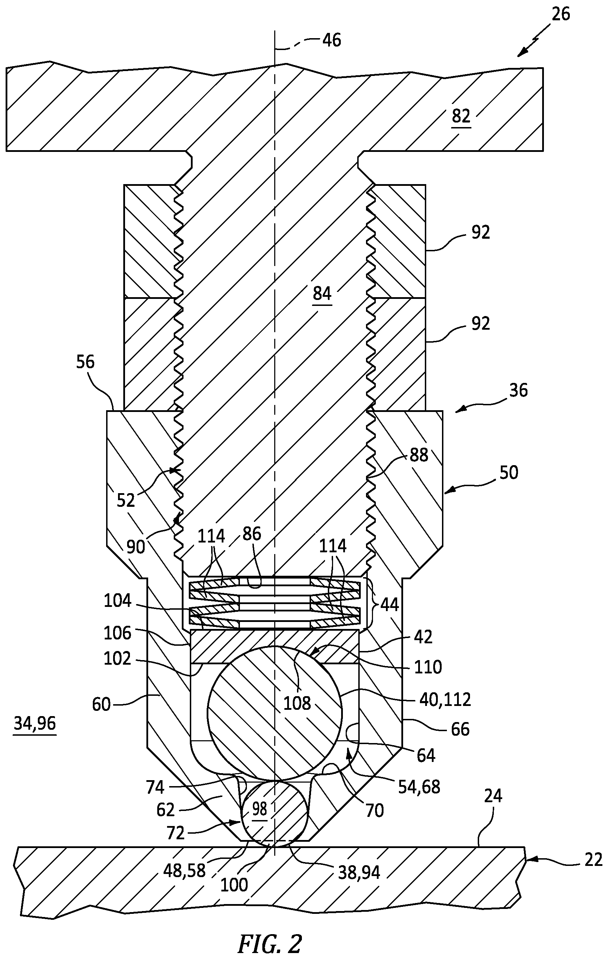

Referring to FIG. 2, the mechanical surface treatment tool 26 includes a roller support 36, a spherical roller 38 and a roller support assembly. The roller support assembly of FIG. 2 includes a spherical bearing element 40, a bushing 42 and a biasing device such as a spring element 44.

The roller support 36 extends longitudinally along a longitudinal axis 46 to a distal end 48 (e.g., a tip) of the roller support 36. This axis 46 may be a centerline axis of the mechanical surface treatment tool 26 and/or one or more of its elements; e.g., the roller support 36, the bushing 42 and the spring element 44. The roller support 36 of FIG. 2 includes a housing 50, an adaptor 52 and an internal cavity 54.

The support housing 50 extends longitudinally along the axis 46 from a base end 56 of the support housing 50 to a distal end 58 of the support housing 50; e.g., the support distal end 48. The support housing 50 includes a tubular sidewall 60 and a tip endwall 62.

The housing sidewall 60 extends longitudinally from the housing base end 56 to the housing endwall 62. The housing sidewall 60 extends radially from a radial inner side 64 of the housing sidewall 60 to a radial outer side 66 of the support housing 50 and its housing sidewall 60. The housing sidewall 60 extends circumferentially around the axis 46 providing the housing sidewall 60 with a full-hoop tubular geometry. With this arrangement, the sidewall inner side 64 forms an outer peripheral boundary of an internal bore 68 of the support housing 50.

The housing endwall 62 is connected to (e.g., formed integral with) the housing endwall 62. The housing endwall 62 is arranged at (e.g., on, adjacent or proximate) the support distal end 48 / the housing distal end 58. The housing endwall 62 of FIG. 2, for example, extends longitudinally along the axis 46 from the housing sidewall 60 to the support distal end 48 / the housing distal end 58. The housing endwall 62 caps the housing bore 68. The housing bore 68 of FIG. 2 thereby projects longitudinally along the axis 46 into the support housing 50 from the housing base end 56 to the housing endwall 62 at an interior side 70 of the housing endwall 62.

The housing endwall 62 includes a port 72. The port 72 extends longitudinally along the axis 46 through the housing endwall 62 from the endwall interior side 70 to the support distal end 48 / the housing distal end 58. This port 72 is at least partially or completely formed by a bearing surface 74 of the housing endwall 62. The port 72 of FIG. 2, for example, projects radially out form the axis 46 to the endwall bearing surface 74, where the endwall bearing surface 74 extends circumferentially around (e.g., circumscribes) the axis 46 and the port 72.

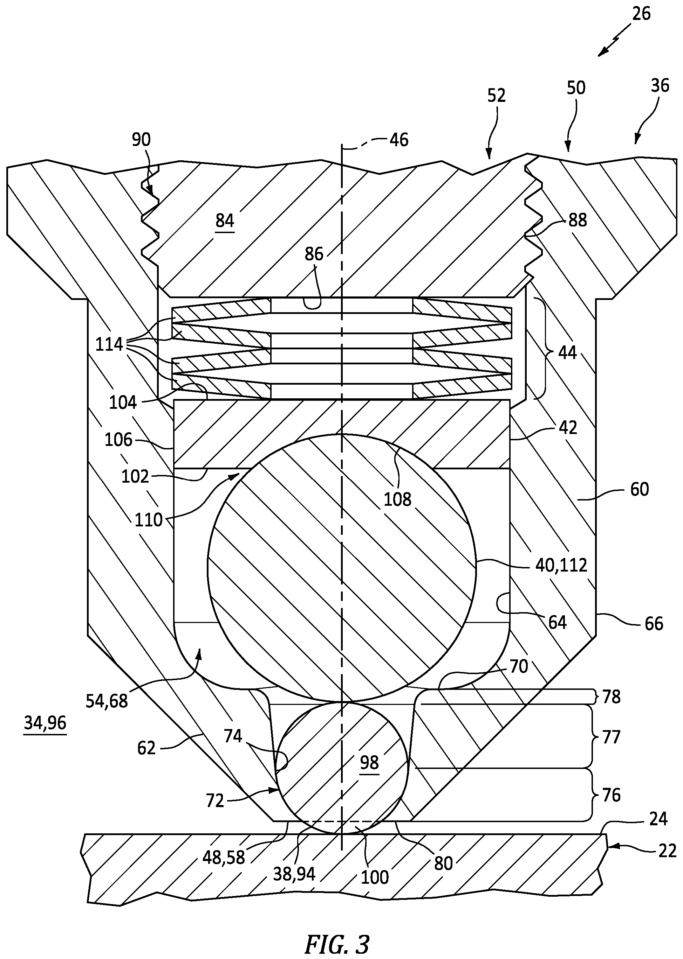

Referring to FIG. 3, the endwall bearing surface 74 may include one or more longitudinal segments 76-78. The bearing segment 76 is disposed at the support distal end 48 / the housing distal end 58. The bearing segment 76 of FIG. 3, for example, extends longitudinally along the axis 46 from the bore segment 77 to the support distal end 48 / the housing distal end 58. The endwall bearing surface 74 and its bearing segment 76 may thereby be contiguous with an exterior tip surface 80 of the support housing 50 at its support distal end 48. The bearing segment 76 of FIG. 3 has an annular spherical segment geometry configured to accommodate and mate with the spherical roller 38 as described below. The bore segment 77 extends longitudinally along the axis 46 (in a longitudinal direction towards the endwall interior side 70) from the bearing segment 76 to the flare segment 78, or alternatively to the endwall interior side 70 where the flare segment 78 is omitted. The bore segment 77 may have an annular frustoconical geometry which (e.g., continuously) flares radially outward away from the axis 46 as the bore segment 77 extends longitudinally from (or about) the bearing segment 76 to (or about) the flare segment 78. The flare segment 78 is disposed at the endwall interior side 70. The flare segment 78 of FIG. 3, for example, extends longitudinally along the axis 46 from the bore segment 77 to the endwall interior side 70. The flare segment 78 may have an annular frustoconical geometry which (e.g., continuously) flares radially outward away from the axis 46 as the flare segment 78 extends longitudinally from (or about) the bore segment 77 to (or about) the endwall interior side 70. With this arrangement, the port 72 of FIG. 3 tapers radially inward towards the axis 46 as the port 72 extends longitudinally along the axis 46 from (or about) the endwall interior side 70 to (or about) the support distal end 48 / the housing distal end 58.

Referring to FIG. 1, the support adaptor 52 is configured for mounting the mechanical surface treatment tool 26 to the manipulator 28. Referring to FIG. 2, the support adaptor 52 includes a base 82 and a mount 84 connected to (e.g., formed integral with) the adaptor base 82. The adaptor mount 84 projects longitudinally along the axis 46 out from the adaptor base 82 to a distal end 86 of the support adaptor 52 and its adaptor mount 84. The adaptor mount 84 projects radially out to a radial outer side 88 of the adaptor mount 84. At least a portion or an entirety of the mount outer side 88 may be externally threaded; e.g., include exterior threads. Similarly, a portion of the sidewall inner side 64 may be internally threaded; e.g., include interior threads. The adaptor mount 84 may thereby mate with the support housing 50 through a threaded interface 90. The adaptor mount 84 of FIG. 2, for example, is inserted longitudinally into the housing bore 68 and threaded into the support housing 50 and its housing sidewall 60. One or more jam nuts 92 may also be threaded onto the adaptor mount 84 to rotationally lock the support housing 50 onto the support adaptor 52. Of course, various other techniques are known in the art for securing components together, and the present disclosure is not limited to any particular ones thereof.

The internal cavity 54 of FIG. 2 extends longitudinally along the axis 46 within the roller support 36 between the support housing 50 and the support adaptor 52. In particular, the internal cavity 54 of FIG. 2 extends longitudinally within the roller support 36 from the housing endwall 62 at its endwall interior side 70 to the adaptor mount 84 at its mount distal end 86. The internal cavity 54 extends laterally within the roller support 36 and its support housing 50. In particular, the internal cavity 54 extends radially out from the axis 46 to the sidewall inner side 64.

Referring to FIG. 3, the spherical roller 38 is configured as a spherical ball such as a metal ball bearing element, a hardened steel ball, etc. This spherical roller 38 is nested in the port 72. The spherical roller 38 of FIG. 3, for example, is disposed in the port 72 with an outer exterior surface 94 of the spherical roller 38 engaging (e.g., longitudinally and/or radially abutted against and contacting) the endwall bearing surface 74 along its bearing segment 76. With this arrangement, the spherical roller 38 forms a seal with the housing endwall 62 and plugs the port 72 such that the internal cavity 68 may be fluidly decoupled (e.g., isolated) from a workspace environment 96 external to the mechanical surface treatment tool 26. Moreover, the outer exterior surface 94 of the spherical roller 38 is operable to slide against the endwall bearing surface 74 such that the spherical roller 38 may freely rotate relative to the roller support 36 and the housing endwall 62. To facilitate rolling of the spherical roller 38, the outer exterior surface 94 of the spherical roller 38 may be coated with a tribological coating. In addition or alternatively, the endwall bearing surface 74 (e.g., at least along the bearing segment 76 or an entirety thereof) may be prepared with a tribological coating. An example of the tribological coating is an electroless nickel (Ni) coating impregnated with polytetrafluoroethylene (PTFE); e.g., Teflon^{®}.

In addition to being nested with the port 72, the spherical roller 38 also projects longitudinally out from the port 72 and, more generally, the roller support 36 into the workspace environment 96. With this arrangement, a major portion 98 of the spherical roller 38 is disposed within the roller support 36 while a minor exposed portion 100 of the spherical roller 38 is disposed outside of the roller support 36 within the workspace environment 96. The exposed portion 100 of the spherical roller 38 of FIG. 3 may account for less than twenty percent (20%) or ten percent (10%) of the spherical roller 38. The present disclosure, however, is not limited to the foregoing exemplary percentages. The exposed portion 100 of the spherical roller 38, for example, may alternatively account for another percentage of the spherical roller 38 which is less than fifty percent (50%).

The spherical bearing element 40 is configured as a spherical ball such as a metal ball bearing element, a hardened steel ball, etc. The spherical bearing element 40 is disposed in the internal cavity 54 and engaged with (e.g., longitudinally abutted against and contacting) the spherical roller 38. The spherical bearing element 40 of FIG. 3, for example, may project (e.g., slightly) longitudinally into the port 72 to the spherical roller 38.

The bushing 42 extends longitudinally along the axis 46 between opposing longitudinal sides 102 and 104 of the bushing 42. The bushing 42 projects radially out from the axis 46 to a radial outer side 106 of the bushing 42. This bushing 42 is sized and arranged to longitudinally translate within the roller support 36. The bushing 42 of FIG. 3, for example, is disposed within the internal cavity 54. The bushing outer side 106 is arranged radially next to the sidewall inner side 64. With this arrangement, the bushing 42 and its bushing outer side 106 may slide longitudinally along the housing sidewall 60 and its sidewall inner side 64.

The bushing 42 includes a bearing surface 108 which forms a recess 110 in the bushing 42. The recess 110 of FIG. 3 projects longitudinally along the axis 46 partially into the bushing 42 from the first bushing side 102. The bushing bearing surface 108 may thereby be contiguous with a side surface of the bushing 42 at its first bushing side 102. The bushing bearing surface 108 of FIG. 3 has an annular spherical segment geometry configured to accommodate and mate with the spherical bearing element 40. In particular, the spherical bearing element 40 of FIG. 3 is nested in the recess 110. The spherical bearing element 40 of FIG. 3, for example, projects longitudinally into the recess 110 such that an outer exterior surface 112 of the spherical bearing element 40 engages (e.g., longitudinally and/or radially abuts against and contacts) the bushing bearing surface 108. With this arrangement, the spherical bearing element 40 is operable to slide against the bushing bearing surface 108 such that the spherical bearing element 40 may freely rotate relative to the bushing 42. To facilitate rolling of the spherical bearing element 40, the bushing 42 may be constructed from a relatively low friction material such as bronze. In addition or alternatively, the bushing bearing surface 108 may be coated with a tribological coating. An example of this tribological coating is an electroless nickel (Ni) coating impregnated with polytetrafluoroethylene (PTFE); e.g., Teflon^{®}.

The spring element 44 is configured to longitudinally bias (e.g., preload) the spherical roller 38 against the endwall bearing surface 74. The spring element 44 of FIG. 3, for example, is disposed longitudinally within the internal cavity 54. In particular, the spring element 44 is (e.g., slightly) longitudinally compressed between and engages (a) the support adaptor 52 and its adaptor mount 84 at the mount distal end 86 and (b) the bushing 42 at its second bushing side 104. The bushing 42 is located longitudinally between the spring element 44 and the spherical bearing element 40, where the spring element 44 longitudinally biases the bushing 42 longitudinally against the spherical bearing element 40. The spherical bearing element 40 is located longitudinally between the bushing 42 and the spherical roller 38, where the spring element 44 longitudinally biases the spherical bearing element 40 longitudinally against the spherical roller 38 through the bushing 42. The spherical roller 38 is located longitudinally between the spherical bearing element 40 and the housing endwall 62, where the spring element 44 longitudinally biases the spherical roller 38 longitudinally against the housing endwall 62 sequentially through the bushing 42 and the spherical bearing element 40.

The spring element 44 of FIG. 3 includes one or more Belleville springs 114; e.g., Belleville washers. These Belleville springs 114 are serially arranged in a stack along the axis 46. The Belleville springs 114 may be arranged in one or more pairs, where each pair includes a respective set of the Belleville springs 114 with their concave regions longitudinally next to and facing one another. Alternatively, convex regions of the respective Belleville springs 114 may be longitudinally next to and face one another. Moreover, while the spring element 44 is described above as a Belleville-type spring element, the present disclosure is not limited to such an exemplary spring element configuration. The spring element 44, for example, may alternatively be configured as a coil spring element or the like.

Referring to FIG. 1, the manipulator 28 is operatively coupled to the mechanical surface treatment tool 26 through the support adaptor 52 and its adaptor base 82. The manipulator 28 is configured to move the mechanical surface treatment tool 26 within the workspace 34 relative to the component 22. The manipulator 28, for example, is configured to arrange the mechanical surface treatment tool 26 next to the component 22 such that the spherical roller 38 engages (e.g., abuts against and contacts) the component surface 24. The manipulator 28 is also configured to press the mechanical surface treatment tool 26 against the component 22. The manipulator 28, more particularly, is configured to apply a static pressure load against the component surface 24 through the mechanical surface treatment tool 26 and its spherical roller 38. An example of the manipulator 28 is a multi-axis robot; e.g., a six-axis (6-axis) robotic arm.

The controller 30 is in signal communication (e.g., hardwired and/or wirelessly coupled) with the manipulator 28. The controller 30 may be implemented with a combination of hardware and software. The hardware may include memory 116 and at least one processing device 118, which processing device 118 may include one or more single-core and/or multi-core processors. The hardware may also or alternatively include analog and/or digital circuitry other than that described above.

The memory 116 is configured to store software (e.g., program instructions) for execution by the processing device 118, which software execution may control and/or facilitate performance of one or more operations such as those described in the method below. The memory 116 may be a non-transitory computer readable medium. For example, the memory 116 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

The fixture 32 may be configured to secure the component 22 in a known, stationary position during the mechanical surface treatment. The fixture 32, for example, may clamp or otherwise hold the component 22, and the fixture 32 may be mounted to a stationary base. It is contemplated, however, the fixture 32 may alternatively be mounted to another moveable device to facilitate movement (e.g., adjustment, positioning, etc.) of the component 22 within the workspace 34.

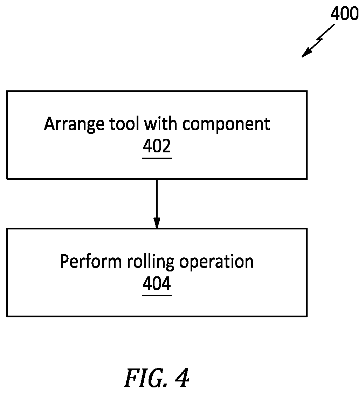

FIG. 4 is a flow diagram of a method 400 of operation for mechanical surface treating a component. For ease of description, the treatment method 400 is described below with reference to the treatment system 20 of FIGS. 1-3. The treatment method 400 of the present disclosure, however, may alternatively be performed with other mechanical surface treatment systems.

In step 402, the mechanical surface treatment tool 26 is arranged with the component 22. The controller 30, for example, may signal the manipulator 28 to locate the mechanical surface treatment tool 26 next to the component 22 such that the spherical roller 38 engages the component 22 and its component surface 24 to be treated.

In step 404, a rolling operation is performed on the component surface 24. The controller 30, for example, may signal the manipulator 28 to apply a static pressure load against the component 22 and its component surface 24 through the spherical roller 38. For example, the manipulator 28 may press the mechanical surface treatment tool 26 longitudinally along the axis 46 (e.g., vertically) against the component 22. Concurrently, the controller 30 may signal the manipulator 28 to move the mechanical surface treatment tool 26 laterally along the component 22. The spherical roller 38 may thereby roll along the component surface 24 while also applying the static pressure load. The rolling operation may thereby deep roll mechanical surface treat the material of the component 22 beneath the component surface 24. More particularly, the rolling operation may impart compressive stresses within the material of the component 22 along and beneath the component surface 24 being treated. The imparting of these compressive stresses may improve damage tolerance and/or a fatigue life of the component 22; e.g., by ten times (10x). Here, the component material is metal such as, but not limited to, steel, aluminum (Al) or an alloy thereof, titanium (Ti) or an alloy thereof, nickel (Ni) or an alloy thereof (e.g., Inconel^{®}, Waspaloy^{®}, etc.). The treatment method 400 of the present disclosure, however, is not limited to being performed on such metal components.

By configuring the mechanical surface treatment tool 26 with the spherical roller 38 rather than a wheel roller, the mechanical surface treatment tool 26 may move in various directions during the rolling operation without skidding (e.g., laterally slipping) and/or requiring the mechanical surface treatment tool 26 to be rotate about the axis 46. Moreover, by biasing the spherical roller 38 against the endwall bearing surface 74 through the spherical bearing element 40, skidding and/or other non-rolling motion of the spherical roller 38 may be reduced or prevented along the component surface 24.

In some embodiments, the static pressure load applied during the rolling step 404 may be maintained constant as the mechanical surface treatment tool 26 moves along the component surface 24. In other embodiments, the static pressure load applied during the rolling step 404 may be varied as the mechanical surface treatment tool 26 moves along the component surface 24.

The component 22 treated using the treatment system 20 and/or the treatment method 400 may have various configurations. The component 22, for example, may be configured as a component of an aircraft. The aircraft may be an airplane, a helicopter, a drone (e.g., an unmanned aerial vehicle (UAV)) or any other manned or unmanned aerial vehicle or system. The aircraft component may be a component of an aircraft airframe or a component of an aircraft engine; e.g., a gas turbine engine. Examples of the airframe component include, but are not limited to, a rib, a stringer, or a spar. Examples of the engine component include, but are not limited to, an engine case, a rotor blade (e.g., a fan blade (e.g., a root and/or an edge of the fan blade), a compressor blade (e.g., a root and/or an edge of the compressor blade), a turbine blade (e.g., a root and/or an edge of the turbine blade), etc.), a stator vane (e.g., a fan exit guide vane, a compressor vane, a turbine vane, a nozzle vane, etc.), a flowpath wall, a shroud (e.g., a blade outer air seal (BOAS)), a rotor disk or hub, or an integrally bladed rotor. The present disclosure, however, is not limited to treating aircraft components, or aerospace component in general. The engine component, for example, may be utilized for a non-aerospace engine such as an industrial gas turbine engine. In addition, the treatment method 400 may be used for mechanical surface treatment of various metals; e.g., pure metals and/or metal alloys.

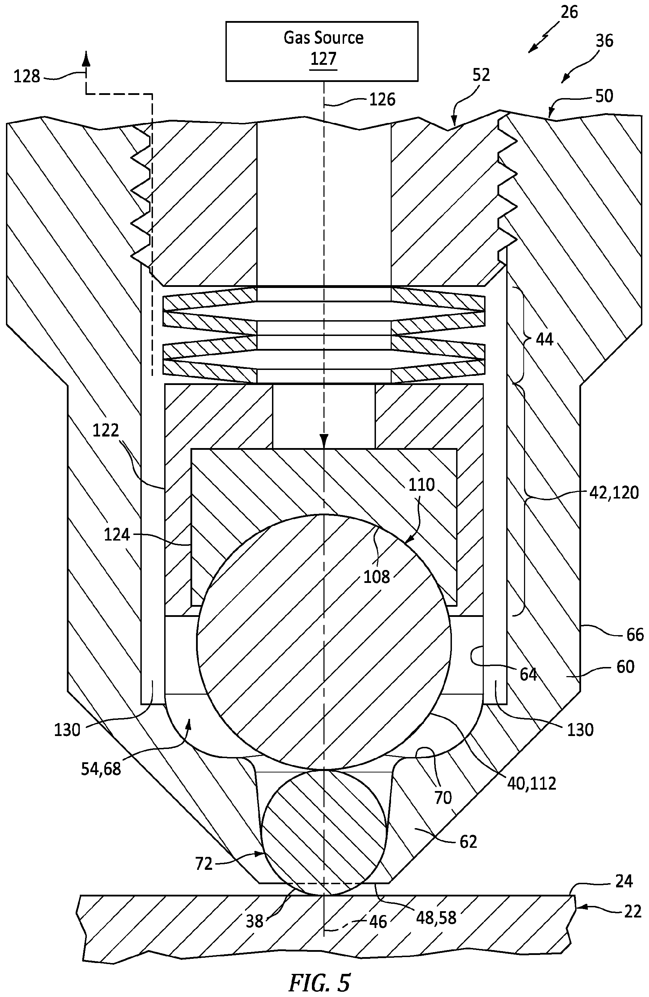

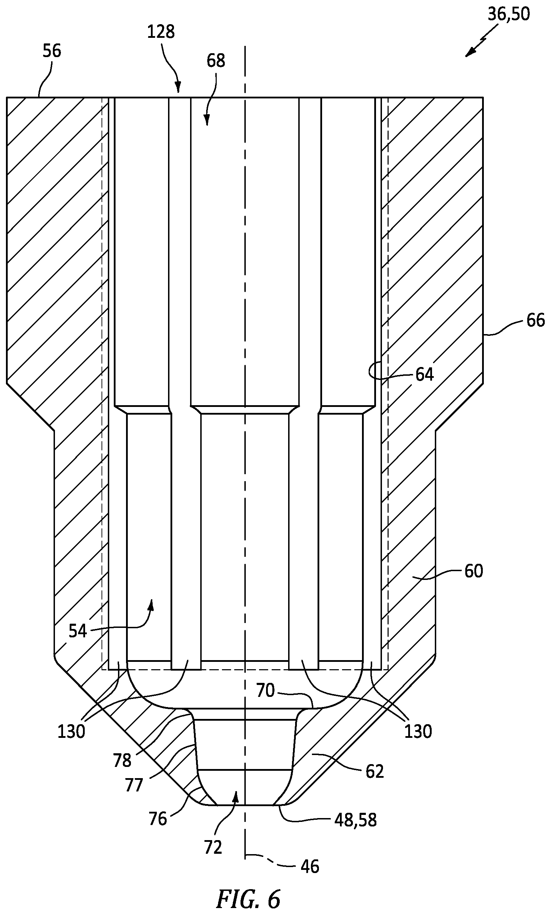

In some embodiments, referring to FIG. 5, the mechanical surface treatment tool 26 may be configured with a gas bearing 120; e.g., an air bearing. The bushing 42 of FIG. 5, for example, includes a carrier 122 and a porous bushing element 124 mounted to and seated in the carrier 122. The bushing element 124 of FIG. 5 includes the bushing bearing surface 108, and is formed from a fluid permeable material; e.g., porous carbon or porous graphite. This bushing element 124 is fluidly coupled between an internal source gas circuit 126 and the internal cavity 54. The gas circuit 126 is configured to direct pressurized air (or an inert gas) received from a gas source 127 to the bushing element 124. The gas may flow through pores of the bushing element 124 from the gas circuit 126 to the bushing bearing surface 108 to provide a gas cushion between the bushing bearing surface 108 and the spherical bearing element 40. The gas may then be removed from the internal cavity 54 through an exhaust circuit 128. Referring to FIG. 6, the exhaust circuit 128 may include one or more channels 130 in the support housing 50. The channels 130 of FIG. 6, for example, are arranged circumferentially about the axis 46 in an array; e.g., an annular array. Each channel 130 projects radially into the housing sidewall 60 from the sidewall inner side 64. Each channel 130 extends longitudinally in the housing sidewall 60 along the internal cavity 54 and away from the housing endwall 62. Here, a pressure of the gas may be tuned such that substantially none of the gas leaks out of the mechanical surface treatment tool 26 between the spherical roller 38 and the housing endwall 62.

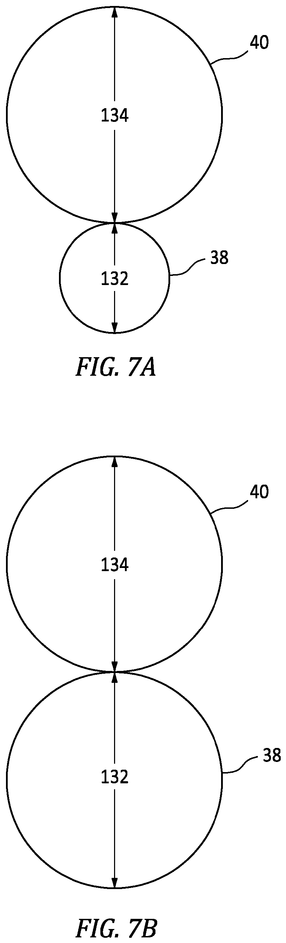

Referring to FIGS. 7A and 7B, the spherical roller 38 has a roller diameter 132 and the spherical bearing element 40 has a bearing element diameter 134. In some embodiments, referring to FIG. 7A, the bearing element diameter 134 may be greater than the roller diameter 132. The bearing element diameter 134, for example, may be equal to or greater than one and one-quarter times (1.25x), one and one-half times (1.5x), two times (2x), three times (3x) or more than the roller diameter 132. In other embodiments, referring to FIG. 7B, the roller diameter 132 may alternatively be equal to the bearing element diameter 134. Of course, it is contemplated other relationships between the bearing element diameter 134 and the roller diameter 132 may be used depending upon the specific tool requirements and/or mechanical surface treatment requirements.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A method of operation, comprising:
arranging a tool (26) with a component (22), the tool (26) including a spherical roller (38), a spherical bearing element (40), a bushing (42) and a spring element (44), the spherical roller (38) contacting a surface (24) of the component (22), and the spring element (44) biasing the spherical bearing element (40) against the spherical roller (38) through the bushing (42); and
performing a rolling operation on the surface (24) of the component (22) with the spherical roller (38).

2. The method of claim 1, wherein the performing of the rolling operation includes:
applying a static pressure load against the surface (24) of the component (22) with the spherical roller (38); and
moving the tool (26) with a manipulator (28) to roll the spherical roller (38) along the surface (24) of the component (22) as the static pressure load is applied against the surface (24) of the component (22).

3. An apparatus for mechanical surface treating a component (22), comprising:
a roller support (36) extending longitudinally along a longitudinal axis (46) to a distal end (48), the roller support (36) including an endwall, a port (72) and an internal cavity (54), the endwall forming the distal end (48) of the roller support (36), and the port (72) extending from the internal cavity (54) through the endwall;
a spherical roller (38) disposed in the port (72) and contacting the endwall, an exposed portion (100) of the spherical roller (38) projecting out of the roller support (36) from the port (72), and the exposed portion (100) of the spherical roller (38) configured to contact a surface (24) of the component (22) during a mechanical surface treatment operation on the component (22);
a spherical bearing element (40) disposed in the internal cavity (54) and contacting the spherical roller (38);
a bushing (42) disposed in the internal cavity (54) and contacting the spherical bearing element (40) with the spherical bearing element (40) longitudinally between the spherical roller (38) and the bushing (42); and
a spring element (44) disposed in the internal cavity (54) and biased longitudinally against the bearing, the spring element (44) configured to bias the spherical roller (38) against the endwall through the spherical bearing element (40) and the bushing (42).

4. The apparatus of claim 3, wherein the apparatus further comprises an air bearing which includes the bushing (42).

5. A system (20) for mechanical surface treating a component (22), comprising:
a tool (26) including a roller support (36), a spherical roller (38) and a biasing device (44), the roller support (36) including an endwall, a port (72) and an internal cavity (54), the roller support (36) extending longitudinally along a longitudinal axis (46) to the endwall, the port (72) extending from the internal cavity (54) through the endwall, the spherical roller (38) nested in the port (72) with an exposed portion (100) of the spherical roller (38) projecting out of the roller support (36) from the port (72), the exposed portion (100) of the spherical roller (38) configured to contact a surface (24) of the component (22), and the biasing device (44) disposed in the internal cavity (54) and configured to bias the spherical roller (38) against the endwall; and
a manipulator (28) operatively coupled to the tool (26), the manipulator (28) configured to move the tool (26) along the surface (24) of the component (22) such that the spherical roller (38) rolls along the surface (24) of the component (22), and the manipulator (28) configured to apply a static pressure load against the surface (24) of the component (22) through the spherical roller (38).

6. The system (20) of claim 5, wherein:
the endwall comprises a bearing surface (74) at least partially forming the port (72);
the bearing surface (74) comprises a spherical segment geometry; and
the biasing device (44) is configured to bias the spherical roller (38) against the bearing surface (74),
wherein, optionally, the bearing surface (74) extends to a longitudinal distal end (48) of the roller support (36).

7. The system (20) of claim 6, wherein:
the bearing surface (74) includes a bearing segment (76) and a bore segment (77);
the bearing segment (76) has the spherical segment geometry, and the biasing device (44) is configured to bias the spherical roller (28) against the bearing segment (76); and
the bore segment (77) has a frustoconical geometry flaring out from the bearing segment (76) as the bore segment (77) extends longitudinally towards the internal cavity (54).

8. The system (20) of any of claims 5 to 7, wherein:
the tool (26) further includes a spherical bearing element (40) disposed in the internal cavity (54) and longitudinally contacting the spherical roller (38);
the biasing device (44) configured to bias the spherical bearing element (40) against the spherical roller (38).

9. The system (20) of claim 8, wherein the spherical bearing element (40) projects longitudinally into the port (72).

10. The system (20) of claim 8 or 9, wherein:
the spherical roller (38) has a roller diameter (132); and
the spherical bearing element (40) has a bearing element diameter (134) which is greater than or equal to the roller diameter (132).

11. The system (20) of claim 8, 9 or 10, wherein:
the tool (26) further includes a bushing (42) disposed in the internal cavity (54);
the spherical bearing element (40) is longitudinally between and contacts spherical roller (38) and the bushing (42); and
the biasing device (44) is configured to bias the bushing (42) against the spherical bearing element (40),
wherein, optionally:
the biasing device longitudinally contacts the bushing (42); and/or
the bushing (42) comprises a bearing surface (108) forming a recess (110) in the bushing (42), the bearing surface (108) comprises a spherical segment geometry, and the spherical bearing element (40) contacts and moves along the bearing surface (108).

12. The system (20) of claim 11, wherein:
the tool (26) further includes a gas bearing (120) comprising the bushing (42); and/or
the tool (26) further includes an internal source gas circuit (126), and the bushing (42) comprises a porous material fluidly coupling the internal source gas circuit (126) to the internal cavity (54).

13. The system (20) of any of claims 5 to 12, wherein the biasing device (44) comprises one or more Belleville springs (114).

14. The system (20) of any of claims 5 to 13, wherein:
the roller support (36) includes a housing (50) and an adaptor (52) threaded into the housing (50);
the housing (50) including a tubular sidewall (60) and the endwall; and
the cavity (54) extends through the tubular sidewall (60) from the adaptor (52) to the endwall.

15. The system (20) of claim 14, wherein the roller support (36) further includes one or more jam nuts (92) locking the adaptor (52) with the housing (50).
